# EUROPÄISCHE PATENTSCHRIFT

(11) **EP 3 034 414 B1**
(45) Veröffentlichungstag und Bekanntmachung des Hinweises auf die Patenterteilung: **22.02.2017**
(21) Anmeldenummer: 14199108.3
(22) Anmeldetag: 19.12.2014
(51) Int. Cl.: B65B 5/06, B65B 35/40, B65B 43/52, B65B 59/00, B65B 65/00, B65B 35/20, B65B 43/48, B65B 65/02, B65G 54/02

(54) **Verfahren zum Übertragen von Packgut in Behältnisse und zum Weitertransport der befüllten Behältnisse**
Method for transferring articles to be packaged to containers and further transport of the filled containers
Procédé de transfert de produit d'emballage dans des récipients et de transport des récipients remplis

(43) Veröffentlichungstag der Anmeldung: 22.06.2016
(73) Patentinhaber: UHLMANN PAC-SYSTEME GmbH & Co. KG, 88471 Laupheim (DE)
(72) Erfinder: Aumann, Thomas, 88451 Dettingen (DE); Zieher, Daniel, 88444 Ummendorf (DE); Rodi, Wolfgang, 88471 Laupheim / Baustetten (DE); Fochler, Fritz, 89358 Kammeltal-Behlingen (DE); Wegerer, Mathias, 88453 Erolzheim-Edelbeuren (DE); Riekenbrauck, Jörg, 88477 Schwendi (DE); Haaga, Jürgen, 89616 Rottenacker (DE)
(74) Vertreter: Wächter, Jochen

(56) Entgegenhaltungen:
- EP-A1- 1 530 541
- DE-A1- 4 100 769
- DE-A1- 10 123 220
- DE-A1- 19 860 577
- DE-A1-102005 017 961
- US-A1- 2013 326 997

## Beschreibung

Die vorliegende Erfindung betrifft ein Verfahren zum Übertragen von Packgut, insbesondere Blisterpackungen, in Behältnisse, insbesondere Faltschachteln, und zum Weitertransport der befüllten Behältnisse.

In der pharmazeutischen Industrie werden zur Aufbewahrung von Medikamenten häufig versiegelte Blisterpackungen verwendet, die eine Vielzahl von Näpfen enthalten, in welche die pharmazeutischen Produkte, wie etwa Dragees oder Tabletten, eingebracht sind. Diese Blisterpackungen werden üblicherweise nach ihrer Herstellung beim weiteren Verpackungsprozess einer Verpackungsstation zugeführt, in der die Blisterpackungen einzeln oder als Blisterpackungsstapel in Faltschachteln eingebracht werden.

Um die Blisterpackungen in die Faltschachteln einzubringen, werden die Blisterpackungen mit Hilfe einer Transportvorrichtung entlang einer ersten Bewegungsbahn transportiert, während die Faltschachteln mithilfe einer Fördervorrichtung, die entsprechende Aufnahmen für die Faltschachteln umfasst, entlang einer zweiten Bewegungsbahn parallel zur ersten Bewegungsbahn transportiert werden. Die ersten und zweiten Bewegungsbahnen sind so aufeinander abgestimmt, dass die Blisterpackungen oder Blisterpackungsstapel zumindest zeitweise neben einer offenen Seite der zugeordneten Faltschachtel angeordnet sind. Dort werden die Blisterpackungen seitlich in die jeweilige Faltschachtel eingeschoben. Anschließend wird die Faltschachtel mit den darin enthaltenen Blisterpackungen auf der Fördervorrichtung der Faltschachteln weiterbewegt. Während des Einschubs der Blisterpackungen in die Faltschachteln stehen die Transportvorrichtung und die Fördervorrichtung entweder still oder werden beide mit derselben Geschwindigkeit nebeneinander bewegt.

Darüber hinaus sind Transportvorrichtungen bekannt, bei denen Schlitten entlang einer Laufschiene unabhängig voneinander bewegt werden. Dies wird realisiert, indem die Laufschiene eine Linearmotor-Antriebsvorrichtung zum Antrieb der Schlitten aufweist, wobei jeder Schlitten mindestens einen Permanentmagneten aufweist, der mit der Linearmotor-Antriebsvorrichtung in Wirkverbindung steht. Derartige Transportvorrichtungen mit Linearmotorantrieb sind beispielsweise aus WO 2013/156177 A1 und EP 1 530 541 A1 bekannt.

DE 198 60 577 A1 offenbart ein Verfahren zum Übertragen von Packgut in sogenannte Trays, die hintereinander in einer Tiefziehfolie ausgebildet sind, und zum Weitertransport der befüllten Trays. Hierzu werden die Trays nacheinander neben einem ersten Förderband angeordnet und mit Packgut, das in einer Förderrichtung herantransportiert wird, befüllt. Anschließend wird die Tiefziehfolie mit den Trays in Förderrichtung zu einer Siegelstation zum Versiegeln der befüllten Trays und weiter zu einer Trennvorrichtung zum Heraustrennen der befüllten Trays aus der Tiefziehfolie bewegt. Die herausgetrennten befüllten Trays werden schließlich zum Weitertransport an ein weiteres Förderband übergeben.

Es ist die Aufgabe der vorliegenden Erfindung, ein Verfahren zum Übertragen von Packgut in Behältnisse und zum Weitertransport der befüllten Behältnisse vorzuschlagen, das besonders platz- und kostensparend ist.

Diese Aufgabe wird durch die Merkmale des Anspruchs 1 gelöst.

Erfindungsgemäß weist das Verfahren zum Übertragen von Packgut, insbesondere Blisterpackungen, in Behältnisse, insbesondere Faltschachteln, und zum Weitertransport der befüllten Behältnisse folgende Schritte auf:
Bereitstellen einer Transportvorrichtung mit mindestens einem Schlitten, einer Laufschiene, entlang der der mindestens eine Schlitten bewegbar ist, und einer Linearmotor-Antriebsvorrichtung zum Antrieb des mindestens einen Schlittens, wobei der mindestens eine Schlitten mindestens einen Permanentmagneten aufweist, der mit der Linearmotor-Antriebsvorrichtung in Wirkverbindung steht;
Anordnen mindestens eines Behältnisses zur Aufnahme von Packgut in mindestens einem Übergabebereich, der neben der Transportvorrichtung angeordnet ist;
Fördern von Packgut mit der Transportvorrichtung in einer Förderrichtung zu mindestens einer Übertragungsposition;
Bewegen des Packguts von der mindestens einen Übertragungsposition in den mindestens einen Übergabebereich;
Befüllen des mindestens einen Behältnisses in dem mindestens einen Übergabebereich mit dem Packgut;
Bewegen des mit dem Packgut befüllten mindestens einen Behältnisses von dem mindestens einen Übergabebereich zur Transportvorrichtung; und
Weitertransportieren des mit Packgut befüllten mindestens einen Behältnisses mit der Transportvorrichtung in der Förderrichtung.

Bei diesem Verfahren erfolgt das Antransportieren von Packgut und das Weitertransportieren des mit dem Packgut befüllten Behältnisses mit ein und derselben Transportvorrichtung. Damit kann auf eine separate Fördervorrichtung zum Weitertransport der befüllten Behältnisse verzichtet werden. Neben dem verringerten Platzbedarf wirkt sich der Verzicht auf die separate Fördervorrichtung auch kostensparend aus.

Vorzugsweise werden das Packgut und das mindestens eine befüllte Behältnis jeweils in mindestens einem dem mindestens einen Schlitten zugeordneten Produktaufnahmeraum transportiert.

Dabei weist der Produktaufnahmeraum vorzugsweise bei Transport des Packguts eine erste Länge und bei Transport des mindestens einen befüllten Behältnisses eine zweite Länge auf, die größer als die erste Länge ist. Durch das Transportieren von Packgut und des mindestens einen befüllten Behältnisses in dem Produktaufnahmeraum, der entsprechend der Größe des zu transportierenden Gegenstands verändert wird, können die Gegenstände stabil und nicht lose an dem mindestens einen Schlitten angeordnet und mitgeführt werden. Dadurch wird ein zuverlässiger Transport von verschiedenen Gegenständen mit derselben Transportvorrichtung ermöglicht.

Wird der mindestens eine Produktaufnahmeraum von zwei Halteelementen gebildet, wobei ein Halteelement als ein Schiebeelement und ein Halteelement als ein Anlageelement fungiert, und wobei das Schiebeelement das Packgut oder das befüllte Behältnis zum Halten gegen das Anlageelement drückt, kann das Fixieren und Freigeben des Packguts oder des befüllten Behältnisses durch das Bewegen lediglich eines der beiden Halteelemente relativ zu dem jeweils anderen besonders rasch und zuverlässig erfolgen.

Mit besonderem Vorteil werden die beiden Halteelemente durch die Wechselwirkung mindestens eines Permanentmagneten mit der Linearmotor-Antriebsvorrichtung relativ zueinander verschoben. Folglich kann die Bewegung der Halteelemente zum Verändern des Produktaufnahmeraums in effizienter Weise elektronisch gesteuert werden. Eine manuelle Einstellung der Abstände zwischen den Halteelementen ist nicht erforderlich.

Bei einer besonders bevorzugten Ausgestaltung weist die Transportvorrichtung mindestens einen ersten und einen zweiten Schlitten auf, an denen jeweils eines der Halteelemente angeordnet ist. Hierdurch können die Schlitten und dementsprechend auch die den Schlitten zugeordneten Halteelemente unabhängig voneinander entlang der Laufschiene bewegt werden. Der Vorteil dieser Ausgestaltung besteht insbesondere darin, dass lediglich durch das Bewegen der Schlitten sowohl der Transport in Förderrichtung als auch die Einstellung der Länge des Produktaufnahmeraumes erfolgt.

In vorteilhafter Weiterbildung wird in der Übertragungsposition der erste Schlitten in Förderrichtung bewegt, während der zweite Schlitten in einer zur Förderrichtung entgegengesetzten Richtung bewegt wird, um den Abstand zwischen den Halteelementen und somit die Länge des mindestens einen Produktaufnahmeraums zu vergrößern. Die Veränderung des Abstands erfolgt demnach symmetrisch, so dass die Relativposition des Produktaufnahmeraums zum Übergabebereich unverändert ist. Es ist somit keine weitere Ausgleichsbewegung der Transportvorrichtung erforderlich, wenn das befüllte Behältnis in den Produktaufnahmeraum eingebracht werden soll.

Bevorzugt werden, nachdem das befüllte Behältnis zur Transportvorrichtung bewegt wurde, der erste und zweite Schlitten aufeinander zu bewegt, um das mindestens eine befüllte Behältnis zwischen den Halteelementen zu halten. Dabei kann nur der erste Schlitten in Richtung auf den zweiten Schlitten bewegt werden, während der zweite Schlitten unbewegt ist, oder umgekehrt. Ebenso können beide Schlitten gleichzeitig aufeinander zu bewegt werden.

In vorteilhafter Weise erfolgt das Bewegen des Packguts von der Transportvorrichtung zum Übergabebereich durch Schieben des Packguts in einer ersten Richtung quer zur Förderrichtung. In gleicher Weise erfolgt das Befüllen des mindestens einen Behältnisses mit Packgut durch das Einschieben des Packguts in das mindestens eine Behältnis in einer ersten Richtung quer zur Förderrichtung. Schließlich erfolgt das Bewegen des mindestens einen befüllten Behältnisses vom Übergabebereich zur Transportvorrichtung ebenfalls durch das Schieben des mindestens einen befüllten Behältnisses, jedoch nun in einer zweiten, zur ersten Richtung entgegengesetzten Richtung. Durch das Übertragen des Packguts, das Einbringen in das mindestens eine Behältnis, und das Bewegen des befüllten Behältnisses mittels Verschieben ergibt sich ein stabiler und schneller Gesamtprozess.

Das mindestens eine Behältnis zur Aufnahme von Packgut kann mit einer zweiten Transportvorrichtung zum mindestens einen Übergabebereich gefördert werden.

Ebenso kann das mindestens eine Behältnis zur Aufnahme von Packgut auch zunächst mit der Transportvorrichtung in der Förderrichtung zu der mindestens einen Übergabeposition gefördert werden und anschließend in dem Übergabebereich, insbesondere durch Verschieben, angeordnet werden. In dieser Ausgestaltung werden sowohl das Packgut als auch das mindestens eine Behältnis mit Hilfe der Transportvorrichtung antransportiert. Da im Anschluss an das Befüllen das mindestens eine befüllte Behältnis ebenfalls mit Hilfe der Transportvorrichtung weitertransportiert wird, wird nur noch eine Transportvorrichtung benötigt. Dies wirkt sich platz- und kostensparend aus.

Alternativ kann ein Verfahren zum Befüllen von Behältnissen, insbesondere Faltschachteln, mit Packgut, insbesondere Blisterpackungen, und zum Weitertransport der befüllten Behältnisse, folgende Schritte aufweisen:
Bereitstellen einer Transportvorrichtung mit mindestens einem Schlitten, einer Laufschiene, entlang der der mindestens eine Schlitten bewegbar ist, und einer Linearmotor-Antriebsvorrichtung zum Antrieb des mindestens einen Schlittens, wobei der mindestens eine Schlitten mindestens einen Permanentmagneten aufweist, der mit der Linearmotor-Antriebsvorrichtung in Wirkverbindung steht,
Anordnen mindestens eines Behältnisses zur Aufnahme von Packgut in mindestens einem Übergabebereich, der neben der Transportvorrichtung angeordnet ist,
Fördern von Packgut mit der Transportvorrichtung in einer Förderrichtung zu mindestens einer Übertragungsposition,
Bewegen des mindestens einen Behältnisses aus dem mindestens einen Übergabebereich in die mindestens eine Übertragungsposition, dabei Befüllen des mindestens einen Behältnisses mit Packgut, und
Weitertransportieren des mit Packgut befüllten mindestens einen Behältnisses mit der Transportvorrichtung in der Förderrichtung.

Bei diesem alternativen Verfahren erfolgt das Antransportieren von Packgut und das Weitertransportieren des mit dem Packgut befüllten Behältnisses ebenfalls mit ein und derselben Transportvorrichtung. Damit kann auf eine separate Fördervorrichtung zum Weitertransport der befüllten Behältnisse verzichtet werden. Neben dem verringerten Platzbedarf wirkt sich der Verzicht auf die separate Fördervorrichtung auch kostensparend aus.

Vorzugsweise werden das Packgut und das mindestens eine befüllte Behältnis jeweils in mindestens einem dem mindestens einen Schlitten zugeordneten Produktaufnahmeraum transportiert.

Dabei weist der Produktaufnahmeraum vorzugsweise bei Transport des Packguts eine erste Länge und bei Transport des mindestens einen befüllten Behältnisses eine zweite Länge auf, die größer als die erste Länge ist. Durch das Transportieren von Packgut und des mindestens einen befüllten Behältnisses in dem Produktaufnahmeraum, der entsprechend der Größe des zu transportierenden Gegenstands verändert wird, können die Gegenstände stabil und nicht lose an dem mindestens einen Schlitten angeordnet und mitgeführt werden. Dadurch wird ein zuverlässiger Transport von verschiedenen Gegenständen mit derselben Transportvorrichtung ermöglicht.

Wird der mindestens eine Produktaufnahmeraum von zwei Halteelementen gebildet, wobei ein Halteelement als ein Schiebeelement und ein Halteelement als ein Anlageelement fungiert, und wobei das Schiebeelement das Packgut oder das befüllte Behältnis zum Halten gegen das Anlageelement drückt, kann das Fixieren und Freigeben des Packguts oder des befüllten Behältnisses durch das Bewegen lediglich eines der beiden Halteelemente relativ zu dem jeweils anderen besonders rasch und zuverlässig erfolgen.

Mit besonderem Vorteil werden die beiden Halteelemente durch die Wechselwirkung mindestens eines Permanentmagneten mit der Linearmotor-Antriebsvorrichtung relativ zueinander verschoben. Folglich kann die Bewegung der Halteelemente zum Verändern des Produktaufnahmeraums in effizienter Weise elektronisch gesteuert werden. Eine manuelle Einstellung der Abstände zwischen den Halteelementen ist nicht erforderlich.

Bei einer besonders bevorzugten Ausgestaltung weist die Transportvorrichtung mindestens einen ersten und einen zweiten Schlitten auf, an denen jeweils eines der Halteelemente angeordnet ist. Hierdurch können die Schlitten und dementsprechend auch die den Schlitten zugeordneten Halteelemente unabhängig voneinander entlang der Laufschiene bewegt werden. Der Vorteil dieser Ausgestaltung besteht insbesondere darin, dass lediglich durch das Bewegen der Schlitten sowohl der Transport in Förderrichtung als auch die Einstellung der Länge des Produktaufnahmeraumes erfolgt.

In vorteilhafter Weiterbildung wird in der Übertragungsposition der erste Schlitten in Förderrichtung bewegt, während der zweite Schlitten in einer zur Förderrichtung entgegengesetzten Richtung bewegt wird, um den Abstand zwischen den Halteelementen und somit die Länge des mindestens einen Produktaufnahmeraums zu vergrößern. Die Veränderung des Abstands erfolgt demnach symmetrisch, so dass die Relativposition des Produktaufnahmeraums zum Übergabebereich unverändert ist. Es ist somit keine weitere Ausgleichsbewegung der Transportvorrichtung erforderlich, wenn das leere Behältnis in den Produktaufnahmeraum eingebracht werden soll.

Bevorzugt werden, nachdem das leere Behältnis zur Transportvorrichtung bewegt wurde und dabei das Packgut aufgenommen hat, der erste und zweite Schlitten aufeinander zu bewegt, um das mindestens eine nunmehr befüllte Behältnis zwischen den Halteelementen zu halten. Dabei kann nur der erste Schlitten in Richtung auf den zweiten Schlitten bewegt werden, während der zweite Schlitten unbewegt ist, oder umgekehrt. Ebenso können beide Schlitten gleichzeitig aufeinander zu bewegt werden.

In vorteilhafter Weise erfolgt das Bewegen des mindestens einen leeren Behältnisses vom Übergabebereich zur Transportvorrichtung durch Schieben des mindestens einen leeren Behältnisses in einer Richtung, die senkrecht zur Förderrichtung der Transportvorrichtung ist. Durch das Bewegen des leeren Behältnisses mittels Verschieben ergibt sich ein stabiler und schneller Gesamtprozess.

Das mindestens eine Behältnis zur Aufnahme von Packgut kann mit einer zweiten Transportvorrichtung zum mindestens einen Übergabebereich gefördert werden.

Ebenso kann das mindestens eine Behältnis zur Aufnahme von Packgut auch zunächst mit der Transportvorrichtung in der Förderrichtung zu der mindestens einen Übergabeposition gefördert werden und anschließend in dem Übergabebereich, insbesondere durch Verschieben, angeordnet werden. In dieser Ausgestaltung werden sowohl das Packgut als auch das mindestens eine Behältnis mit Hilfe der Transportvorrichtung antransportiert. Da im Anschluss an das Befüllen das mindestens eine befüllte Behältnis ebenfalls mit Hilfe der Transportvorrichtung weitertransportiert wird, wird nur noch eine Transportvorrichtung benötigt. Dies wirkt sich platz- und kostensparend aus.

Weitere Eigenschaften und Vorteile der vorliegenden Erfindung ergeben sich aus der nachfolgenden Beschreibung unter Bezugnahme auf die Zeichnungen.
- Fig. 1: ist eine schematische Seitenansicht einer Transportvorrichtung, wie sie bei dem erfindungsgemäßen Verfahren zur Anwendung kommen kann;
- Fig. 2: ist eine perspektivische Ansicht eines Abschnitts der Transportvorrichtung aus Fig. 1, die den generellen Aufbau der Transportvorrichtung zeigt;
- Fig. 3A-D: sind jeweils schematische Ansichten von oben, in denen vier Phasen eines ersten Ausführungsbeispiels des erfindungsgemäßen Verfahrens gezeigt sind;
- Fig. 4A-C: sind jeweils perspektivische Ansichten, in denen drei Phasen eines weiteren Ausführungsbeispiels des erfindungsgemäßen Verfahrens schematisch gezeigt sind; und
- Fig. 5A-D: sind jeweils schematische Ansichten von oben, in denen vier Phasen eines weiteren Ausführungsbeispiels des erfindungsgemäßen Verfahrens gezeigt sind.

Das erfindungsgemäße Verfahren zur Übertragung von Packgut in Behältnisse und zum Weitertransport der befüllten Behältnisse wird nachfolgend anhand der Zeichnungen näher beschrieben. In den entsprechenden Figuren ist das Packgut 2 in Form von Blisterpackungen oder Blisterpackungsstapeln dargestellt. Weiterhin sind die Behältnisse 4 in Form von Faltschachteln dargestellt. Es ist jedoch klar, dass das Packgut 2 und die Behältnisse 4 nicht auf diese konkreten Gestaltungen beschränkt sind.

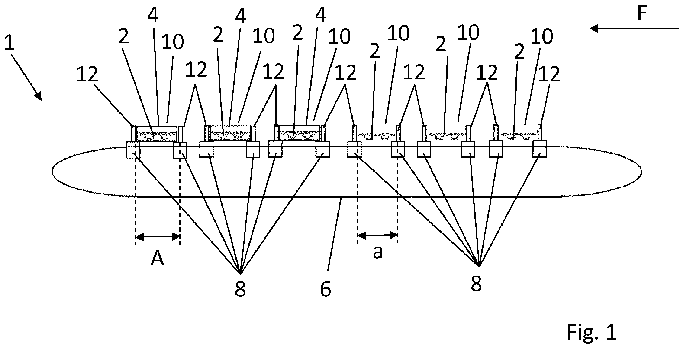

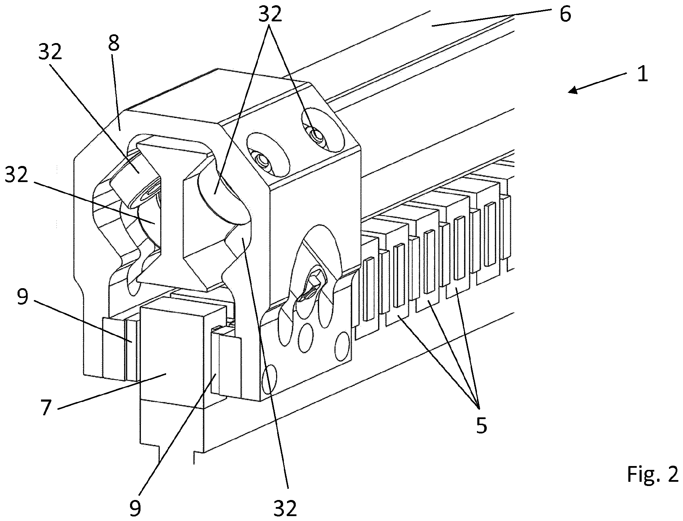

Fig. 1 zeigt in einer Seitenansicht den Aufbau einer Transportvorrichtung 1, die bei der Durchführung des erfindungsgemäßen Verfahrens zum Einsatz kommen kann. Fig. 2 zeigt den grundsätzlichen Aufbau der Transportvorrichtung 1. Die Transportvorrichtung 1 umfasst eine ortsfeste, insbesondere umlaufend angeordnete Laufschiene 6 zur Führung mindestens eines bewegbaren Schlittens 8, vorzugsweise mehrerer unabhängig voneinander bewegbarer Schlitten 8. Wenngleich im dargestellten Beispielsfall der Fig. 1 zwölf Schlitten 8 gezeigt sind, können auch weniger oder mehr als zwölf Schlitten 8 gleichzeitig an der Laufschiene 6 angeordnet sein.

Zum Antrieb der Schlitten 8 dient eine Linearmotor-Antriebsvorrichtung 7, die eine Mehrzahl von aneinandergereihten Spulen 5 umfasst, die einzeln bestromt werden können. Jeder Schlitten 8 weist wiederum wenigstens einen, vorzugsweise zwei Permanentmagnete 9 auf, die mit der Linearmotor-Antriebsvorrichtung 7 in Wirkverbindung stehen. Dementsprechend kann jeder Schlitten 8 individuell entlang der Laufschiene 6 in Bewegung versetzt werden. Die Lagerung und Führung der Schlitten 8 entlang der Laufschiene 6 erfolgt, wie Fig. 2 zeigt, über eine Mehrzahl von Laufrollen 32. Für die konstruktive Ausgestaltung der Schlitten 8 und deren Lagerung an der Laufschiene 6 existiert eine große Anzahl von Möglichkeiten.

Die Förderrichtung F des Packguts 2 in der Transportvorrichtung 1 ist vorzugsweise geradlinig, wie in Fig. 1 mit dem Pfeil dargestellt. Die Förderrichtung F des Packguts 2 kann aber auch veränderlich sein, d.h. es können auch Kurvenbahnen durchlaufen werden. Ebenso kann die Förderrichtung F entgegengesetzt zur Förderrichtung in Fig. 1 sein.

Im Beispiel der Fig. 1 hat die umlaufende Laufschiene 6 die Form eines langgestreckten, liegenden Ovals. Die Schlitten 8 bewegen sich um die gesamte Laufschiene 6 herum, bis sie wieder die Ausgangsposition erreicht haben. Der längere geradlinige obere Abschnitt der Laufschiene 6 erstreckt sich in Förderrichtung F und bildet den Teil der Transportvorrichtung 1, in dem Packgut 2 und/oder Behältnisse 4 befördert werden.

Die Schlitten 8 sind in Fig. 1 an dem oberen Abschnitt der Laufschiene 6 in Förderrichtung F hintereinander angeordnet und zu insgesamt sechs Paaren von Schlitten 8 zusammengefasst. Jedem Paar von Schlitten 8 ist ein Produktaufnahmeraum 10 zugeordnet, in dem Packgut 2 oder ein mit Packgut 2 befülltes Behältnis 4 transportiert werden kann. Jeder Produktaufnahmeraum 10 wird in der Regel von zwei Halteelementen 12 begrenzt, einem in Förderrichtung F vorderen Halteelement und einem in Förderrichtung F hinteren Halteelement.

In der dargestellten Ausführungsform weist jeder Schlitten 8 genau ein Halteelement 12 auf, sodass ein Produktaufnahmeraum 10 jeweils zwischen zwei Halteelementen 12 eines Paares von Schlitten 8 definiert ist.

Dabei werden die beiden Schlitten 8 eines Paares beim Transport von Packgut 2 oder Behältnissen 4 identisch bewegt, sodass das Packgut 2 oder das mit Packgut 2 befüllte Behältnis 4 im Produktaufnahmeraum 10 gehalten und vorzugsweise leicht von den Halteelementen 12 beaufschlagt wird.

Die in Fig. 1 drei rechten Paare von Schlitten 8 transportieren jeweils ein Packgut 2 und die in Fig. 1 drei linken Paare von Schlitten 8 transportieren jeweils ein mit Packgut 2 befülltes Behältnis 4. Die Produktaufnahmeräume 10 weisen meist bei Transport des Packguts 2 eine erste Länge a und bei Transport eines befüllten Behältnisses 4 eine zweite Länge A, die größer als die erste Länge a ist, auf, weil die Behältnisse 4 eine größere Abmessung aufweisen als das Packgut 2. In der Ausgestaltung von Fig. 1 bedeutet dies, dass die Schlitten 8 der drei rechten Paare von Schlitten 8 in einem engeren Abstand zueinander verfahren werden als die Schlitten 8 der drei linken Paare von Schlitten 8.

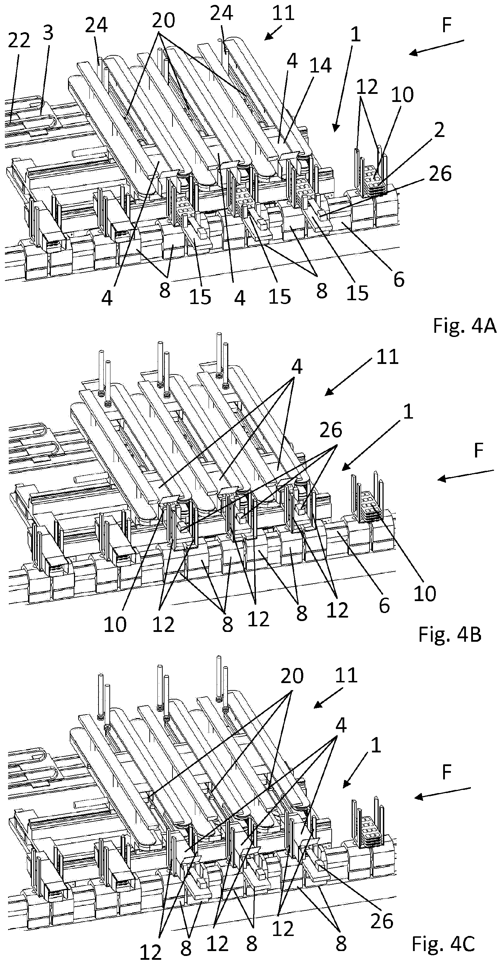

Die zwischenzeitlichen Schritte zur Befüllung von Behältnissen 4 mit dem Packgut 2 sind unten unter Bezugnahme auf Fig. 4A bis 4C näher erläutert.

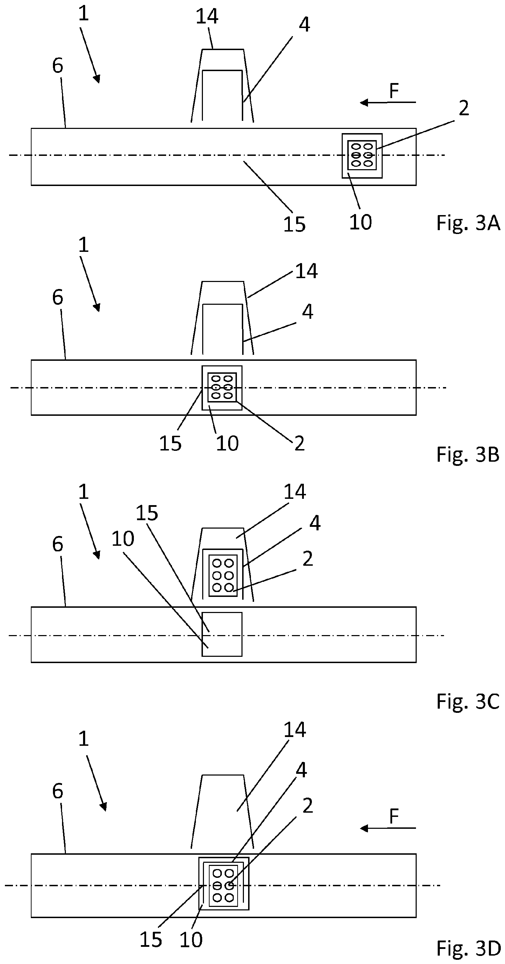

Im Folgenden werden die einzelnen Phasen des erfindungsgemäßen Verfahrens und der Ausführungsformen anhand der Figuren 3 bis 5 näher erläutert.

Die Fig. 3A bis 3D sind jeweils schematische Ansichten von oben einer Transportvorrichtung 1 mit einer Laufschiene 6 und einem Produktaufnahmeraum 10, in denen vier Phasen eines einfachen Ausführungsbeispiels des erfindungsgemäßen Verfahrens schematisch dargestellt sind. In den Fig. 3A bis 3D ist außerdem ein Übergabebereich 14 dargestellt, der neben einer Übertragungsposition 15 der Transportvorrichtung 1 angeordnet ist.

In der ersten Phase in Fig. 3A ist in dem Übergabebereich 14 bereits ein Behältnis 4 zur Aufnahme von Packgut 2 angeordnet, wobei die offene Seite des Behältnisses 4 der Laufschiene 6 der Transportvorrichtung 1 zugewandt ist. Ein Produktaufnahmeraum 10 der Transportvorrichtung 1 ist mit Packgut 2 bestückt und wird in Förderrichtung F bewegt.

In der zweiten Phase in Fig. 3B wurde ausgehend von der Darstellung in Fig. 3A der Produktaufnahmeraum 10 mit dem Packgut 2 in eine Übertragungsposition 15 neben dem Übergabebereich 14 bewegt. Der in der Übertragungsposition 15 angeordnete Produktaufnahmeraum 10 ist in Richtung quer zur Förderrichtung F neben dem Behältnis 4 angeordnet.

In Fig. 3C wurde ausgehend von Fig. 3B das Packgut 2 von dem Schlitten 8 in den Übergabebereich 14 bewegt, in dem sich das Behältnis 4 befindet. Dabei wurde das Behältnis 4 mit dem Packgut 2 befüllt.

In Fig. 3D wurde ausgehend von Fig. 3C das mit dem Packgut 2 befüllte Behältnis 4 von dem Übergabebereich 14 zurück zur Transportvorrichtung 1 bewegt und im Produktaufnahmeraum 10 angeordnet. Vorzugsweise wurde hierzu der Produktaufnahmeraum 10 etwas vergrößert. Der Produktaufnahmeraum 10 mit dem befüllten Behältnis 4 kann nun in Förderrichtung F weiter transportiert werden.

Fig. 4A bis 4C sind jeweils perspektivische Ansichten eines Abschnitts einer Transportvorrichtung 1 entsprechend der Transportvorrichtung 1 aus Fig. 1 und einer Zuführvorrichtung 11 zum Herantransportieren der Behältnisse 4, in denen drei Phasen eines weiteren Ausführungsbeispiels des erfindungsgemäßen Verfahrens dargestellt sind.

Wie in Fig. 4A bis 4C zu sehen ist, sind drei Übergabebereiche 14 in Förderrichtung F hintereinander angeordnet. Eine Zuführvorrichtung 11 sorgt für die Zuführung von Behältnissen 4 zu den einzelnen Übergabebereichen 14.

Die Zuführvorrichtung 11 umfasst im dargestellten Beispielsfall eine Zuführeinrichtung 22 zum Zuführen von flachen Faltschachtelzuschnitten 3 parallel zur Förderrichtung F. Diese Faltschachtelzuschnitte 3 werden dann in drei Linien der Zuführvorrichtung 11 mittels jeweils einer Aufrichteinrichtung 24 aufgeklappt und im aufgeklappten Zustand als Behältnisse 4 mittels einer linearen Transportstrecke 20 quer zur Förderrichtung F zum jeweiligen Übergabebereich 14 bewegt. Als Zuführeinrichtung 22 zum Zuführen der flachen Faltschachtelzuschnitte 3 kann beispielsweise ein Saugband verwendet werden. Als Aufrichteinrichtungen 24 können beispielsweise vertikal bewegliche Sauggreifer verwendet werden. Die linearen Transportstrecken 20 können beispielsweise durch Paare von gegensinnig angetriebenen Riemen gebildet sein, die die aufgeklappten Faltschachtelzuschnitte (Behältnisse 4) zwischen sich halten. Neben dieser konkreten Ausgestaltung existieren für den Fachmann viele weitere Möglichkeiten der Ausgestaltung und relativen Anordnung der Elemente der Zuführvorrichtung 11.

In der in Fig. 4A gezeigten ersten Phase des Verfahrens wurden in den Übergabebereichen 14 mittels der Zuführvorrichtung 11 bereits aufgerichtete Behältnisse 4 angeordnet. Weiterhin wurde neben jedem Übergabebereich ein mit einem Stapel von Packgut 2 befüllter Produktaufnahmeraum 10 in der Übertragungsposition 15 angeordnet. Hierzu wurden die Produktaufnahmeräume 10 mit herkömmlichen Füllvorrichtungen (nicht dargestellt) befüllt und die Schlitten 8 wurden entsprechend in Förderrichtung F bis zu den Übertragungspositionen 15 verschoben.

In Fig. 4B wurde das Packgut 2 von den Produktaufnahmeräumen 10 durch Verschiebeelemente 26, vorzugsweise Schiebeplatten, in einer ersten Richtung quer zur Förderrichtung F zu den Übergabebereichen 14 und dort in die Behältnisse 4 verschoben. Vorzugsweise werden darüber hinaus die Halteelemente 12 der entleerten Schlitten 8 durch entgegengesetzte Bewegung auseinander bewegt, um die Produktaufnahmeräume 10 zu vergrößern, damit genug Raum zur Aufnahme der befüllten Behältnisse 4 geschaffen wird.

Fig. 4C zeigt eine dritte Phase, in der ausgehend von der Darstellung in Fig. 4B die befüllten Behältnisse 4 von den Übergabebereichen 14 in einer zweiten Richtung entgegen der ersten Richtung zurück in die Produktaufnahmeräume 10 verschoben wurden. Die Verschiebung erfolgt im dargestellten Ausführungsbeispiel vorzugsweise mittels der linearen Transportstrecken 20, wobei während des Verschiebens vorzugsweise die Verschiebeelemente 26 als Gegenhalter für die befüllten Behältnisse 4 dienen. Am Ende befinden sich die Verschiebeelemente 26 wieder in den in Fig. 4A gezeigten Ausgangspositionen.

In einer weiteren, nicht gezeigten Phase der ersten Ausführungsform des erfindungsgemäßen Verfahrens können nun, ausgehend von der Darstellung in Fig. 4C, die mit den befüllten Behältnissen 4 bestückten Schlitten 8 in Förderrichtung F weiterbewegt werden und anschließend die nachfolgenden, mit Packgut 2 bestückten Schlitten 8 in die Übertragungspositionen 15 an der Transportvorrichtung 1 nachrücken. Damit ist ein Zyklus des Verfahrens abgeschlossen und die zuvor beschriebenen Schritte werden nun beliebig oft wiederholt.

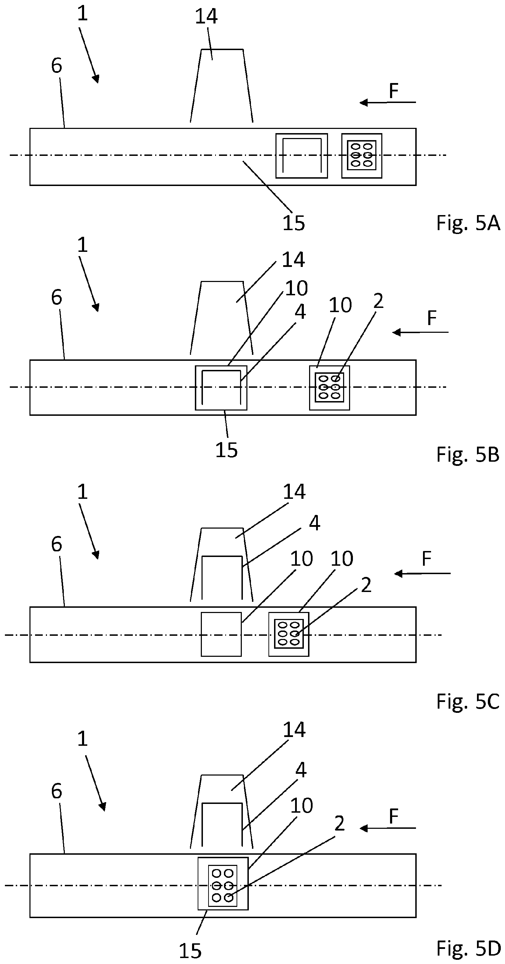

Fig. 5A bis 5D sind jeweils schematische Ansichten von oben einer Transportvorrichtung 1 mit einer Laufschiene 6 und mehreren Produktaufnahmeräumen 10, in denen vier Phasen eines einfachen Ausführungsbeispiels des erfindungsgemäßen Verfahrens schematisch dargestellt sind. In den Fig. 5A bis 5D ist außerdem wiederum ein Übergabebereich 14 dargestellt, der neben einer Übertragungsposition 15 der Transportvorrichtung 1 angeordnet ist.

Gegenüber den Ausführungsformen in Fig. 3A bis 3D und Fig. 4A bis 4C, bei der die Behältnisse 4 durch eine separate Zuführvorrichtung 11 in die Übergabebereiche 14 zugeführt werden, wird bei der in Fig. 5A bis 5D gezeigten Ausführungsform die Transportvorrichtung 1 auch benutzt, um die leeren, zu befüllenden Behältnisse 4 zuzuführen. Mit anderen Worten werden sowohl das Packgut 2 als auch die Behältnisse 4 mit der Transportvorrichtung 1 antransportiert.

In Fig. 5A ist eine erste Phase dieses Ausführungsbeispiels des erfindungsgemäßen Verfahrens gezeigt. In Fig. 5A sind in dem rechten Abschnitt der Transportvorrichtung 1 ein mit einem leeren Behältnis 4 bestückter erster Produktaufnahmeraum 10 und ein mit einem Packgut 2 bestückter Produktaufnahmeraum 10 gezeigt, die hintereinander bewegt werden.

Fig. 5B zeigt eine zweite Phase des Ausführungsbeispiels. Ausgehend von der Darstellung in Fig. 5A wurden der mit dem Behältnis 4 bestückte erste Produktaufnahmeraum 10 und der mit dem Packgut 2 bestückte zweite Produktaufnahmeraum 10 in Förderrichtung F weiterbewegt. Wie zu sehen ist, befindet sich der erste Produktaufnahmeraum 10 mit dem leeren Behältnis 4 in der Übertragungsposition 15 neben dem Übergabebereich 14.

In Fig. 5C wurde - ausgehend von der Darstellung in Fig. 5B - das leere Behältnis 4 von dem Produktaufnahmeraum 10 in den Übergabebereich 14 bewegt. Die offene Seite des Behältnisses 4 ist der Transportvorrichtung 1 zugewandt.

In der in Fig. 5D dargestellten vierten Phase wurde der (nicht mehr zu sehende) leere erste Produktaufnahmeraum 10 in Förderrichtung F weiterbewegt und der mit Packgut 2 bestückte zweite Produktaufnahmeraum 10 in Förderrichtung F in die Übertragungsposition 15 nachgerückt.

In den folgenden Phasen dieses Ausführungsbeispiels wird das im Übergabebereich 14 angeordnete Behältnis 4 mit dem an dem nachgerückten zweiten Produktaufnahmeraum 10 transportierten Packgut 2 befüllt. Anschließend wird das befüllte Behältnis 4 wieder in diesen oder einen weiteren nachgerückten Produktaufnahmeraum 10 eingeschoben und mit der Transportvorrichtung 1 weitertransportiert. Diese Verfahrensschritte sind identisch mit den in Bezug auf Fig. 3C und 3D beschriebenen Verfahrensschritten. Auf eine erneute Beschreibung kann daher verzichtet werden.

Alternativ zu den bislang beschriebenen Ausgestaltungen ist es auch möglich, dass nicht das Packgut 2 aus der mindestens einen Übertragungsposition 15 in den mindestens einen Übergabebereich 14 bewegt wird, sondern das mindestens eine leere Behältnis aus dem mindestens einen Übergabebereich 14 in die mindestens eine Übertragungsposition 15 bewegt wird und dabei mit Packgut 2 befüllt wird. Hierfür sind geeignete Schiebe- und Führungsmittel für das mindestens eine Behältnis 4 notwendig. Insbesondere ist es vorteilhaft, wenn das mindestens eine Behältnis 4 als Faltschachtel ausgebildet ist und über das als Blisterverpackung oder Stapel von Blisterverpackungen ausgestaltete Packgut 2 geschoben wird.

Bei den beschriebenen Ausgestaltungen ist jedem Schlitten 8 ein Halteelement 12 zugeordnet. Das Packgut 2 oder die Behältnisse 4 werden in dem Produktaufnahmeraum 10 zwischen den Halteelementen 12 eines Paares von Schlitten 8 gehalten und transportiert. Grundsätzlich können auch n Schlitten 8 in Reihe miteinander n-1 Produktaufnahmeräume definieren, wenn Halteelemente 12 bestimmter Schlitten 8 jeweils beidseitig genutzt werden. Bei einer weiteren Ausgestaltung, die nicht in den Figuren gezeigt ist, können jedem Schlitten 8 auch mindestens zwei Halteelemente zugeordnet sein, d.h. jeder Schlitten 8 beinhaltet für sich alleine mindestens einen Produktaufnahmeraum 10 und/oder kann noch mit anderen Schlitten 8 zur Bildung von Produktaufnahmeräumen 10 zusammenwirken.

Die Halteelemente 12 weisen in jedem Fall eine vertikale Erstreckung auf. Sie können beispielsweise i-förmig ausgebildet sein. In diesem Fall liegen das Packgut 2 oder das Behältnis 4 vorzugweise auf Auflageflächen an den Schlitten 8 auf und werden von den Halteelementen 12 lediglich seitlich gestützt. Ebenso können die Halteelemente 12 auch L-förmig oder umgekehrt T-förmig ausgebildet sein, wobei Schenkel der L-Form oder T-Form dann auch als Auflageflächen des Produktaufnahmeraums 10 dienen. Schließlich können die Halteelemente 12 auch innere Anlageflächen aufweisen, die gekrümmte Abschnitte aufweisen. Ein Halteelement 12 kann nur auf einer Seite zum Halten eines Gegenstands verwendet werden oder auf beiden Seiten. Insofern kann ein Halteelement 12 auch zur Bildung von zwei Produktaufnahmeräumen 10 verwendet werden.

Das bislang beschriebene erfindungsgemäße Grundschema lässt sich in vielen Punkten beliebig modifizieren. So können in allen Ausführungsformen mehrere Produktaufnahmeräume 10 gleichzeitig befüllt, geleert und/oder transportiert werden. Dementsprechend können auch mehrere Übertragungspositionen 15 und Übergabebereiche 14 vorliegen. Insbesondere in den in Fig. 3 und Fig. 5 beschriebenen Ausgestaltungen ist dies zur Erhöhung des Durchsatzes sinnvoll. Die Anzahl von Produktaufnahmeräumen 10 und Schlitten 8 ist grundsätzlich variabel und an den Anwendungsfall anzupassen.

Neben der bislang beschriebenen Schiebebewegung könnten das Packgut 2 und die Behältnisse 4 auch von der Transportvorrichtung 1 zum Übergabebereich 14 bzw. zurück gehoben oder anderweitig bewegt werden. Die Schiebebewegung hat aber den Vorteil der einfachen Gestaltung. Außerdem können durch die Schiebebewegungen auch Beipackzettel (nicht dargestellt), die auf bekannte Weise herantransportiert wurden, zusammen mit dem Packgut 2 in die Behältnisse 4 eingebracht werden.

Die Länge der Produktaufnahmeräume 10 in Förderrichtung F, d.h. der Abstand zwischen jeweils zwei Halteelementen 12, ist grundsätzlich auf die jeweiligen Anwendungszwecke einstellbar. Unterschiedliche Produkte verlangen unterschiedlich lange Produktaufnahmeräume 10. Außerdem sind in der Regel die Produktaufnahmeräume 10 für Behältnisse 4 etwas länger auszugestalten als die Produktaufnahmeräume 10 für Packgut 2. Schließlich kann es zur Erleichterung des Einfügens von Packgut 2 oder Behältnissen 4 in Produktaufnahmeräume 10 sinnvoll sein, diese Produktaufnahmeräume 10 zunächst etwas länger zu gestalten, um sie nach dem erfolgten Einfügen des Packguts 2 oder der Behältnisse 4 wieder in ihrer Länge zu beschränken. Die Relativbewegung der Halteelemente 12 zueinander erfolgt in der Regel durch gezielte Ansteuerung der Schlitten 8 mittels der Linearmotor-Antriebsvorrichtung 7.

Auf diese Weise wird ein höchst flexibles System geschaffen, das alle möglichen Einsatzbereiche abdeckt, ohne den Austausch von Formatteilen notwendig zu machen.

## Patentansprüche

1. Verfahren zum Übertragen von Packgut (2), insbesondere Blisterpackungen, in Behältnisse (4), insbesondere Faltschachteln, und zum Weitertransport der befüllten Behältnisse (4), mit folgenden Schritten:
- Bereitstellen einer Transportvorrichtung (1) mit mindestens einem Schlitten (8), einer Laufschiene (6), entlang der der mindestens eine Schlitten (8) bewegbar ist, und einer Linearmotor-Antriebsvorrichtung (7) zum Antrieb des mindestens einen Schlittens (8), wobei der mindestens eine Schlitten (8) mindestens einen Permanentmagneten (9) aufweist, der mit der Linearmotor-Antriebsvorrichtung (7) in Wirkverbindung steht,
- Anordnen mindestens eines Behältnisses (4) zur Aufnahme von Packgut (2) in mindestens einem Übergabebereich (14), der neben der Transportvorrichtung (1) angeordnet ist,
- Fördern von Packgut (2) mit der Transportvorrichtung (1) in einer Förderrichtung (F) zu mindestens einer Übertragungsposition (15),
- Bewegen des Packguts (2) von der mindestens einen Übertragungsposition (15) in den mindestens einen Übergabebereich (14),
- Befüllen des mindestens einen Behältnisses (4) in dem mindestens einen Übergabebereich (14) mit dem Packgut (2),
- Bewegen des mit dem Packgut (2) befüllten mindestens einen Behältnisses (4) von dem mindestens einen Übergabebereich (14) zur Transportvorrichtung (1), und
- Weitertransportieren des mit Packgut (2) befüllten mindestens einen Behältnisses (4) mit der Transportvorrichtung (1) in der Förderrichtung (F).

2. Verfahren nach Anspruch 1, **dadurch gekennzeichnet, dass** das Packgut (2) und das mindestens eine befüllte Behältnis (4) jeweils in mindestens einem dem mindestens einen Schlitten (8) zugeordneten Produktaufnahmeraum (10) transportiert werden.

3. Verfahren nach Anspruch 2, **dadurch gekennzeichnet, dass** der Produktaufnahmeraum (10) bei Transport des Packguts (2) eine erste Länge (a) und bei Transport des mindestens einen befüllten Behältnisses (4) eine zweite Länge (A), die größer als die erste Länge (a) ist, aufweist.

4. Verfahren nach Anspruch 2 oder 3, **dadurch gekennzeichnet, dass** der mindestens eine Produktaufnahmeraum (10) zwischen zwei Halteelementen (12) ausgebildet ist.

5. Verfahren nach Anspruch 4, **dadurch gekennzeichnet, dass** die zwei Halteelemente (12) durch die Wechselwirkung mindestens eines Permanentmagneten (9) mit der Linearmotor-Antriebsvorrichtung (7) relativ zueinander verschoben werden.

6. Verfahren nach Anspruch 5, **dadurch gekennzeichnet, dass** die Transportvorrichtung (1) mindestens einen ersten und einen zweiten Schlitten (8) aufweist, an denen jeweils eines der Halteelemente (12) angeordnet ist.

7. Verfahren nach Anspruch 6, **dadurch gekennzeichnet, dass** in der mindestens einen Übertragungsposition (15) der erste Schlitten (8) in Förderrichtung (F) bewegt wird, während der zweite Schlitten (8) in einer zur Förderrichtung (F) entgegengesetzten Richtung bewegt wird, um den Abstand zwischen den Halteelementen (12) und somit den mindestens einen Produktaufnahmeraum (10) zu vergrößern.

8. Verfahren nach Anspruch 7, **dadurch gekennzeichnet, dass**, nachdem das befüllte Behältnis (4) zur Transportvorrichtung (1) bewegt wurde, der erste und zweite Schlitten (8) aufeinander zu bewegt werden, um das mindestens eine befüllte Behältnis (4) zwischen den Halteelementen (12) zu halten.

9. Verfahren nach einem der vorhergehenden Ansprüche, **dadurch gekennzeichnet, dass** das Bewegen des Packguts (2) von der Transportvorrichtung (1) zum mindestens einen Übergabebereich (14) durch Schieben des Packguts (2) in einer ersten Richtung quer zur Förderrichtung (F) erfolgt.

10. Verfahren nach einem der vorhergehenden Ansprüche, **dadurch gekennzeichnet, dass** das Befüllen des mindestens einen Behältnisses (4) mit Packgut (2) durch das Einschieben des Packguts (2) in das mindestens eine Behältnis (4) in einer ersten Richtung quer zur Förderrichtung (F) erfolgt.

11. Verfahren nach Anspruch 9 oder 10, **dadurch gekennzeichnet, dass** das Bewegen des mindestens einen befüllten Behältnisses (4) vom mindestens einen Übergabebereich (14) zur Transportvorrichtung (1) durch Schieben des mindestens einen befüllten Behältnisses (4) in einer zweiten, zur ersten Richtung entgegengesetzten Richtung erfolgt.

12. Verfahren nach einem der vorhergehenden Ansprüche, **dadurch gekennzeichnet, dass** das mindestens eine Behältnis (4) zur Aufnahme von Packgut (2) mit einer Zuführvorrichtung (11) zu dem mindestens einen Übergabebereich (14) gefördert wird.

13. Verfahren nach einem der Ansprüche 1 bis 11, **dadurch gekennzeichnet, dass** das mindestens eine Behältnis (4) zur Aufnahme von Packgut (2) zunächst mit der Transportvorrichtung (1) in der Förderrichtung (F) zu der mindestens einen Übergabeposition (15) gefördert wird und anschließend das mindestens eine Behältnis (4) in dem mindestens einen Übergabebereich (14), insbesondere durch Verschieben, angeordnet wird.

14. Verfahren zum Befüllen von Behältnissen (4), insbesondere Faltschachteln, mit Packgut (2), insbesondere Blisterpackungen, und zum Weitertransport der befüllten Behältnisse (4), mit folgenden Schritten:
- Bereitstellen einer Transportvorrichtung (1) mit mindestens einem Schlitten (8), einer Laufschiene (6), entlang der der mindestens eine Schlitten (8) bewegbar ist, und einer Linearmotor-Antriebsvorrichtung (7) zum Antrieb des mindestens einen Schlittens (8), wobei der mindestens eine Schlitten (8) mindestens einen Permanentmagneten (9) aufweist, der mit der Linearmotor-Antriebsvorrichtung (7) in Wirkverbindung steht,
- Anordnen mindestens eines Behältnisses (4) zur Aufnahme von Packgut (2) in mindestens einem Übergabebereich (14), der neben der Transportvorrichtung (1) angeordnet ist,
- Fördern von Packgut (2) mit der Transportvorrichtung (1) in einer Förderrichtung (F) zu mindestens einer Übertragungsposition (15),
- Bewegen des mindestens einen Behältnisses (4) aus dem mindestens einen Übergabebereich (14) in die mindestens eine Übertragungsposition (15), dabei Befüllen des mindestens einen Behältnisses (4) mit Packgut (2), und
- Weitertransportieren des mit Packgut (2) befüllten mindestens einen Behältnisses (4) mit der Transportvorrichtung (1) in der Förderrichtung (F).

15. Verfahren nach Anspruch 14, **dadurch gekennzeichnet, dass** das Packgut (2) und das mindestens eine befüllte Behältnis (4) jeweils in mindestens einem dem mindestens einen Schlitten (8) zugeordneten Produktaufnahmeraum (10) transportiert werden, der bei Transport des Packguts (2) eine erste Länge (a) und bei Transport des mindestens einen befüllten Behältnisses (4) eine zweite Länge (A), die größer als die erste Länge (a) ist, aufweist.

## Claims

1. Method for transferring packaging (2), in particular blister packs, into containers, in particular folded boxes, and for further transport of the filled containers (4), with the following steps:
- Setting up a transport device (1) with at least one slide (8), a track rail (6), along which the at least one slide (8) can be moved, and a linear motor drive device (7) for driving the at least one slide (8), wherein the at least one slide (8) has at least one permanent magnet (9) which is in active connection with the linear motor drive device (7),
- Arranging at least one container (4) for receiving the packaging article (2) in at least one change-over region (14) which is arranged next to the transport device (1),
- Conveying the packaging article (2) with the transport device (1) in a conveying direction (F) to at least one transfer position (15),
- Moving the packaging article (2) from the at least one transfer position (15) into the at least one change-over region (14),
- Filling the at least one container (4) in the at least one change-over region (14) with the packaging article (2),
- Moving the at least one container (4) filled with the packaging article (2) from the at least one change-over region (14) to the transport device (1), and
- Further transporting the at least one container (4) filled with the packaging article (2) with the transport device (1) in the conveying direction (F).

2. Method according to claim 1 **characterised in that** the packaging article (2) and the at least one filled container (4) are each transported in at least one product receiving room (10) assigned to the at least one slide (8).

3. Method according to claim 2 **characterised in that** the product receiving room (10) has a first length (a) during transport of the packaging article (2) and a second length (A), which is greater than the first length (a), during transport of the at least one filled container (4).

4. Method according to claim 2 or 3 **characterised in that** the at least one product receiving room (10) is formed between two holding elements (12),

5. Method according to claim 4 **characterised in that** the two holding elements (12) are displaced relative to one another through the interaction of at least one permanent magnet (9) with the linear motor drive device (7).

6. Method according to claim 5 **characterised in that** the transport device (1) has at least one first and one second slide (8) on each of which one of the holding elements (12) is mounted.

7. Method according to claim 6 **characterised in that** in the at least one transfer position (15) the first slide (8) is moved in the conveying direction (F), whilst the second slide (8) is moved in a direction opposite the conveying direction (F) in order to increase the distance between the holding elements (12) and thus the at least one product receiving room (10).

8. Method according to claim 7 **characterised in that** after the filled container (4) was moved to the transport device (1) the first and second slide (8) are moved up to one another in order to hold the at least one filled container (4) between the holding elements (12).

9. Method according to one of the preceding claims **characterised in that** moving the packaging article (2) from the transport device (1) to the at least one change-over region (14) takes place by sliding the packaging article (2) in a first direction transversely to the conveying direction (F).

10. Method according to one of the preceding claims, **characterised in that** filling the at least one container (4) with packaging article (2) is carried out by sliding the packaging article (2) into the at least one container (4) in a first direction transversely to the conveying direction (F).

11. Method according to claim 9 or 10 **characterised in that** moving the at least one filled container (40 from the at least one change-over region (14) to the transport device (1) is carried out by sliding the at least one filled container (4) in a second direction opposite to the first direction.

12. Method according to one of the preceding claims **characterised in that** the at least one container (4) for receiving the packaging article (2) is moved with a supply device (11) to the at least one change-over region (14).

13. Method according to one of the claims 1 to 11 **characterised in that** the at least one container (4) for receiving the packaging article (2) is moved first with the transport device (1) in the conveying direction (F) to the at least one change-over position (15) and then the at least one container (4) is disposed, more particularly by sliding, in the at least one change-over region (14).

14. Method for filling containers (4), more particularly folded boxes, with packaging articles (2), more particularly blister packs, and for the further transport of the filled containers (4), with the following steps:
- Setting up a transport device (1) with at least one slide (8), a track rail (6), along which the at least one slide (8) can be moved, and a linear motor drive device (7) for driving the at least one slide (8), wherein the at least one slide (8) has at least one permanent magnet (9) which is in active connection with the linear motor drive device (7),
- Arranging at least one container (4) for receiving the packaging article (2) in at least one change-over region (14) which is arranged next to the transport device (1),
- Conveying the packaging article (2) with the transport device (1) in a conveying direction (F) to at least one transfer position (15),
- Moving the at least one packaging article (2) from the at least one change-over region (14) into the at least one transfer position (15), thereby filling the at least one container (4) with the packaging article (2), and
- Further transporting the at least one container (4) filled with the packaging article (2) with the transport device (1) in the conveying direction (F).

15. Method according to claim 14 **characterised in that** the packaging article (2) and the at least one filled container (4) are each transported in at least one product receiving room (10) which is assigned to the at least one slide (8) and which during transport of the packaging article (2) has a first length (a) and during transport of the at least one filled container (4) has a second length (A) which is greater than the first length (a).

## Revendications

1. Procédé servant à transmettre un article d'emballage (2), en particulier des emballages blister, dans des contenants (4), en particulier des cartons pliables, et servant à continuer le transport des contenants (4) remplis, comprenant les étapes suivantes :
- mettre à disposition un dispositif de transport (1) comprenant au moins un chariot (8), un rail de roulement (6), le long duquel l'au moins un chariot (8) peut être déplacé, et un dispositif d'entraînement à moteur linéaire (7) servant à entraîner l'au moins un chariot (8), dans lequel l'au moins un chariot (8) présente au moins un aimant permanent (9), qui est en liaison fonctionnelle avec le dispositif d'entraînement à moteur linéaire (7),
- disposer au moins un contenant (4) servant à recevoir l'article d'emballage (2) dans au moins une zone de transfert (14), qui est disposée à côté du dispositif de transport (1),
- convoyer l'article d'emballage (2) avec le dispositif de transport (1) dans une direction de convoyage (F) vers au moins une position de transmission (15),
- déplacer l'article d'emballage (2) de l'au moins une position de transmission (15) dans l'au moins une zone de transfert (14),
- remplir avec l'article d'emballage (2) l'au moins un contenant (4) dans l'au moins une zone de transfert (14),
- déplacer l'au moins un contenant (4) rempli avec l'article d'emballage (2) de l'au moins une zone de transfert (14) vers le dispositif de transport (1), et
- continuer le transport de l'au moins un contenant (4) rempli avec l'article d'emballage (2) avec le dispositif de transport (1) dans la direction de convoyage (F).

2. Procédé selon la revendication 1, **caractérisé en ce que** l'article d'emballage (2) et l'au moins un contenant (4) rempli sont transportés respectivement dans au moins un espace de réception de produit (10) associé à l'au moins un chariot (8).

3. Procédé selon la revendication 2, **caractérisé en ce que** l'espace de réception de produit (10) présente, lors du transport de l'article d'emballage (2), une première longueur (a) et, lors du transport de l'au moins un contenant (4), une deuxième longueur (A), qui est plus grande que la première longueur (a).

4. Procédé selon la revendication 2 ou 3, **caractérisé en ce que** l'au moins espace de réception de produit (10) est réalisé entre deux éléments de maintien (12).

5. Procédé selon la revendication 4, **caractérisé en ce que** les deux éléments de maintien (12) sont déplacés par coulissement l'un par rapport à l'autre par l'interaction d'au moins un aimant permanent (9) avec le dispositif d'entraînement à moteur linéaire (7).

6. Procédé selon la revendication 5, **caractérisé en ce que** le dispositif de transport (1) présente au moins un premier et un deuxième chariots (8), au niveau desquels respectivement un des éléments de maintien (12) est disposé.

7. Procédé selon la revendication 6, **caractérisé en ce que** dans l'au moins une position de transmission (15), le premier chariot (8) est déplacé dans la direction de convoyage (F), tandis que le deuxième chariot (8) est déplacé dans une direction opposée à la direction de convoyage (F) afin d'agrandir la distance entre les éléments de maintien (12) et, ainsi, l'au moins un espace de réception de produit (10).

8. Procédé selon la revendication 7, **caractérisé en ce que** le premier et le deuxième chariots (8) sont déplacés l'un vers l'autre après que le contenant (4) rempli a été déplacé vers le dispositif de transport (1) afin de maintenir l'au moins un contenant (4) rempli entre les éléments de maintien (12).

9. Procédé selon l'une quelconque des revendications précédentes, **caractérisé en ce que** le déplacement de l'article d'emballage (2) est effectué par le dispositif de transport (1) vers l'au moins une zone de transfert (14) en glissant l'article d'emballage (2) dans une première direction de manière transversale par rapport à la direction de convoyage (F).

10. Procédé selon l'une quelconque des revendications précédentes, **caractérisé en ce que** le remplissage de l'au moins un contenant (4) en article d'emballage (2) est effectué en glissant l'article d'emballage (2) à l'intérieur de l'au moins un contenant (4) dans une première direction de manière transversale par rapport à la direction de convoyage (F).

11. Procédé selon la revendication 9 ou 10, **caractérisé en ce que** le déplacement de l'au moins un contenant (4) rempli est effectué par au moins une zone de transfert (14) vers le dispositif de transport (1) en glissant l'au moins un contenant (4) rempli dans une deuxième direction opposée à la première direction.

12. Procédé selon l'une quelconque des revendications précédentes, **caractérisé en ce que** l'au moins un contenant (4) servant à recevoir l'article d'emballage (2) est convoyé avec un dispositif d'amenée (11) vers l'au moins une zone de transfert (14).

13. Procédé selon l'une quelconque des revendications 1 à 11, **caractérisé en ce que** l'au moins un contenant (4) servant à recevoir l'article d'emballage (2) est convoyé en premier lieu avec le dispositif de transport (1) dans la direction de convoyage (F) vers l'au moins une position de transfert (15), et ensuite l'au moins un contenant (4) est disposé dans l'au moins une zone de transfert (14), en particulier par coulissement.

14. Procédé servant à remplir des contenants (4), en particulier des cartons pliables, d'un article d'emballage (2), en particulier d'emballages blister, et servant à continuer le transport des contenants (4) remplis, comprenant les étapes suivantes :
- mettre à disposition un dispositif de transport (1) comprenant au moins un chariot (8), un rail de roulement (6), le long duquel l'au moins un chariot (8) peut être déplacé, et un dispositif d'entraînement à moteur linéaire (7) servant à entraîner l'au moins un chariot (8), dans lequel l'au moins un chariot (8) présente au moins un aimant permanent (9), qui est en liaison fonctionnelle avec le dispositif d'entraînement à moteur linéaire (7),
- disposer au moins un contenant (4) servant à recevoir l'article d'emballage (2) dans au moins une zone de transfert (14), qui est disposée à côté du dispositif de transport (1),
- convoyer l'article d'emballage (2) avec le dispositif de transport (1) dans une direction de convoyage (F) vers au moins une position de transmission (15),
- déplacer l'au moins un contenant (4) depuis l'au moins une zone de transfert (14) dans l'au moins une position de transmission (15), et ainsi remplir l'au moins un contenant (4) avec l'article d'emballage (2), et
- continuer le transport de l'au moins un contenant (4) rempli avec l'article d'emballage (2) avec le dispositif de transport (1) dans la direction de convoyage (F).

15. Procédé selon la revendication 14, **caractérisé en ce que** l'article d'emballage (2) et l'au moins un contenant (4) rempli sont transportés respectivement dans au moins un espace de réception de produit (10) associé à l'au moins un chariot (8), lequel présente, lors du transport de l'article d'emballage (2), une première longueur (a), et, lors du transport de l'au moins un contenant (4), une deuxième longueur (A), qui est plus grande que la première longueur (a).
